# EUROPÄISCHE PATENTSCHRIFT

(11) **EP 2 313 641 B1**
(45) Veröffentlichungstag und Bekanntmachung des Hinweises auf die Patenterteilung: **12.04.2017**
(21) Anmeldenummer: 09769067.1
(22) Anmeldetag: 28.04.2009
(51) Int. Cl.: F02N 5/04, F02N 11/08, F02N 15/02, B60W 20/00

(54) **VERFAHREN UND VORRICHTUNG ZUM STARTEN EINES VERBRENNUNGSMOTORS EINES HYBRIDANTRIEBSTRANGES**
METHOD AND DEVICE FOR STARTING AN INTERNAL COMBUSTION ENGINE OF A HYBRID DRIVE TRAIN
PROCÉDÉ ET DISPOSITIF DE DÉMARRAGE D'UN MOTEUR À COMBUSTION INTERNE D'UNE CHAÎNE CINÉMATIQUE HYBRIDE

(30) Priorität: 26.06.2008 DE 102008002666
(43) Veröffentlichungstag der Anmeldung: 27.04.2011
(73) Patentinhaber: Robert Bosch GmbH, 70442 Stuttgart (DE)
(72) Erfinder: HUBER, Thomas, 74915 Daisbach (DE); LEHNER, Michael, 75446 Wiernsheim (DE); KAEFER, Oliver, 71711 Murr (DE); MANN, Karsten, 70469 Stuttgart (DE)
(86) Internationale Anmeldenummer: PCT/EP2009/055135
(87) Internationale Veröffentlichungsnummer: WO 2009/156218

(56) Entgegenhaltungen:
- DE-A1- 19 858 992
- DE-A1-102006 008 640
- DE-A1-102006 016 138
- DE-A1-102007 000 227
- DE-C1- 19 956 384

## Beschreibung

### Stand der Technik

Die Erfindung geht aus von einem Verfahren bzw. einer Vorrichtung zum Starten eines Verbrennungsmotors mit den Merkmalen des Oberbegriffs der unabhängigen Ansprüche.

Hybridfahrzeuge verfügen meist über zwei unterschiedliche Antriebsaggregate, beispielsweise über einen Verbrennungsmotor, der mittels eines Kraftstoffes betrieben wird und über eine elektrische Maschine, die ihre elektrische Energie von einem elektrischen Speicher bezieht. Hybridfahrzeuge können zeitweise allein mittels der elektrischen Maschine angetrieben werden. Wenn jedoch keine elektrische Energie mehr vorhanden ist, wird der Verbrennungsmotor gestartet und das Fahrzeug damit angetrieben. Während der Verbrennungsmotor läuft, kann ein Generator angetrieben werden. Dieser Generator erzeugt wiederum elektrische Energie, die im elektrischen Speicher gespeichert wird. Anschließend ist ein elektrischer Betrieb des Fahrzeugs möglich.

Zum Start des Verbrennungsmotors sind verschiedene Verfahren bekannt. In der DE 196 45 943 oder in der DE 10 2006 016 128 A1 wird jeweils eine Startereinheit vorgeschlagen, die zwei verschiedene Startmethoden erlaubt. Die eine Startmethode ist ein Impulsstart und die andere ein Direktstart. Dabei wird der Impulsstart vorzugsweise bei kaltem Motor mit der Energie einer Schwungmasse durchgeführt und der Direktstart kommt bei warmem Motor, z. B. bei Ampelhalt zum Zuge. Somit wird die jeweils günstige Startmethode abhängig von der Temperatur der Brennkraftmaschine selbständig ausgewählt.

### Offenbarung der Erfindung

Die vorliegende Erfindung geht aus von einem Verfahren bzw. einer Vorrichtung zum Starten eines Verbrennungsmotors eines Hybridantriebstranges. Der Hybridantriebstrang weist einen Verbrennungsmotor und mindestens eine weitere Maschine, insbesondere eine elektrische Maschine, auf. Zwischen dem Verbrennungsmotor und der weiteren Maschine ist eine Trennkupplung angeordnet. Weiter ist eine Kurbelwellenwinkelsensorik zur Erfassung des aktuellen Kurbelwellenwinkels des Verbrennungsmotors vorgesehen. Die Kurbelwellenwinkelsensorik kann beispielsweise aus einem Drehzahlgeber mit Drehrichtungserkennung bestehen. Mit einem entsprechenden Auswertealgorithmus kann somit der aktuelle Kurbelwellenwinkel eines Verbrennungsmotors bestimmt werden. Erfindungsgemäß ist eine Hochvoltbatterie vorgesehen, wobei diese Hochvoltbatterie im Wesentlichen entladen ist. Insbesondere genügt die Energie der Hochvoltenergie nicht mehr aus, um den Verbrennungsmotor mittels der elektrischen Maschine zu starten. Um den Start des Verbrennungsmotors dennoch auszuführen, werden folgende Verfahrensschritte durchgeführt:
a) Die Trennkupplung wird oder ist bereits geöffnet
b) Die weitere Maschine wird beschleunigt
c) Nach Abschluss des Beschleunigungsvorgangs der weiteren Maschine wird die Trennkupplung geschlossen, damit der Verbrennungsmotor ebenfalls beschleunigt wird
d) Sobald die Kurbelwellenwinkelsensorik einen günstigen Kurbelwellenwinkel liefert, wird der Verbrennungsmotor mittels Direktstart gestartet

Technischer Hintergrund der Erfindung ist, dass bei entladener Hochvoltbatterie dennoch eine Möglichkeit besteht, den Verbrennungsmotor zu starten. Im Normalfall liefert die Hochvoltbatterie ausreichend Energie, um die elektrische Maschine anzutreiben und damit den Verbrennungsmotor konventionell zu starten, indem dieser auf mindestens Leerlaufgeschwindigkeit beschleunigt wird und anschließend Kraftstoff eingespritzt wird und gezündet wird. Bei entladener Hochvoltbatterie wird nun versucht, durch eine Kombination von Impuls und Direktstartverfahren den Verbrennungsmotor zu starten. Mittels des Impulsverfahrens wird der Verbrennungsmotor wenigstens angedreht. Sobald ein günstiger Kurbelwellenwinkel detektiert wird, wird mittels des Direktstartverfahrens der Verbrennungsmotor gestartet. Für das Impulsstartverfahren wird bei geöffneter Trennkupplung zwischen Verbrennungsmotor und der weiteren Maschine die weitere Maschine beschleunigt. Anschließend wird durch Schließen der Trennkupplung der Verbrennungsmotor angedreht. Eine Kurbelwellenwinkelsensorik erfasst dabei die Lage der Kurbelwelle. Sobald nun ein günstiger Kurbelwellenwinkel erfasst wird, wird der Direktstart ausgeführt. Dabei wird in einen Zylinder Kraftstoff eingespritzt und dieser dann gezündet. Es wird in denjenigen Zylinder Kraftstoff eingespritzt, der sich gerade in der günstigen Lage befindet, also hinter dem oberen Totpunkt, damit der Verbrennungsmotor durch Zünden des Kraftstoffes gestartet werden kann.

Vorteil der Erfindung ist, dass eine Möglichkeit aufgezeigt wird, wie der Verbrennungsmotor gestartet werden kann, auch wenn die Hochvoltbatterie nicht mehr ausreichend Energie für einen konventionellen Start des Verbrennungsmotors liefert. Mittels der Kombination des Impuls- und des Direktstartverfahrens wird der Verbrennungsmotor gestartet. Bei laufendem Verbrennungsmotor kann dann die Hochvoltbatterie wieder aufgeladen werden. Hierzu wird der Verbrennungsmotor mit einem Generator gekoppelt, welcher die elektrische Energie zur Aufladung der Hochvoltbatterie liefert.

In einer anderen Ausgestaltung der Erfindung ist eine Niedervoltbatterie vorgesehen. Die Beschleunigung der weiteren Maschine wird in dieser Ausgestaltung mittels der Energie aus der Niedervoltbatterie durchgeführt. Technischer Hintergrund dieser Ausgestaltung ist, dass neben der Hochvoltbatterie, die auch als Traktionsbatterie bezeichnet wird, in den Fahrzeugen häufig auch eine Bordnetz- oder Starterbatterie vorgesehen ist. Diese dient der Versorgung des Bordnetzes und der Steuergeräte des Fahrzeuges. Die Hochvoltbatterie versorgt ein Hochspannungsnetz, welches beispielsweise eine Spannung aufweist, welche signifikant größer als 24 Volt ist. Die Niedervoltbatterie versorgt ein Niederspannungsnetz, welches beispielsweise ca. 12 Volt aufweist. In dieser Ausgestaltung der Erfindung wird die Energie dieser Niedervoltbatterie dazu verwendet, die weitere Maschine zu beschleunigen. Mittels dieser Rotationsenergie wird dann das Impulsstartverfahren begonnen. Vorteil dieser Ausgestaltung ist, dass die vorhandene Energie aus der Niedervoltbatterie zur Beschleunigung der weiteren Maschine verwendet wird. Der Verbrennungsmotor kann also ohne Zuführung externer Energie, z.B.: mittels Ladekabel, Starterkabel, Antrieb über Rollenprüfstand oder Anrollen des Fahrzeuges, gestartet werden.

In einer anderen Ausgestaltung der Erfindung ist zusätzlich ein Inverter vorgesehen, so dass die Niedervoltspannung der Niedervoltbatterie mittels des Inverters so transformiert werden kann, dass die weitere Maschine mittels der transformierten Spannung angetrieben werden kann. Technischer Hintergrund dieser Ausgestaltung ist, dass bei Vorhandensein von mehr als einer Spannungsebene in einem Fahrzeug Inverter vorgesehen sind, damit Energie aus einer Spannungsebene in eine andere transformiert werden kann. So ein Inverter wird genutzt, um die weitere Maschine mittels der Energie aus der Niedervoltbatterie zu betreiben. Vorteil dieser Ausgestaltung ist, dass die weitere Maschine mittels der Energie aus der Niedervoltbatterie betrieben werden kann.

In einer weiteren Ausgestaltung der Erfindung ist eine weitere Kupplung zwischen dem Abtrieb des Hybridantriebstranges und der weiteren Maschine vorgesehen ist. Diese Kupplung bleibt während des Durchführens der Verfahrensschritte a) bis d) geöffnet. Technischer Hintergrund dieser Ausgestaltung ist, dass das Verfahren zum Starten des Verbrennungsmotors nicht durch die am Abtrieb wirkenden Kräfte beeinflusst wird. Vorteil dieser Ausgestaltung ist, dass weder ein bremsendes noch ein antreibendes Moment über den Abtrieb zu der weiteren Maschine oder dem Verbrennungsmotor gelangen kann.

Eine andere Ausgestaltung der Erfindung sieht vor, dass der Hybridantriebstrang einen Abtrieb aufweist und die weitere Maschine mittels der Energie aus dem Abtrieb beschleunigt wird. Der Abtrieb weist insbesondere Antriebsräder auf. So besteht die Möglichkeit, dass die Energie aus den angetriebenen rotierenden Antriebsrädern zur Beschleunigung der weiteren Maschine genutzt werden kann. Technischer Hintergrund ist, dass eventuell vorhandene Energie im Abtrieb zur Beschleunigung der weiteren Maschine verwendet wird. Vorteil dieser Ausgestaltung ist, dass unabhängig von vorhandener elektrischer Energie die weitere Maschine beschleunigt werden kann.

In einer weiteren Ausgestaltung ist vorgesehen, dass die weitere Kupplung zwischen dem Abtrieb des Hybridantriebstrangs und der weiteren Maschine während des Verfahrensschrittes b) geschlossen ist. Technischer Hintergrund ist, dass die weitere Kupplung geschlossen sein muss, damit die Energie aus dem Abtrieb auf die weitere Maschine übertragen werden kann. Vorteil dieser Ausgestaltung ist, dass unabhängig von eventuell vorhandener elektrischer Energie durch Schließen der weiteren Kupplung ermöglicht wird, dass Rotationsenergie vom Abtrieb auf die weitere Maschine übertragen wird.

In einer weiteren Ausgestaltung der Erfindung ist vorgesehen, dass dieses Verfahren zum Starten des Verbrennungsmotors dazu verwendet wird, einen Aufladevorgang einer im Wesentlich entladenen Hochvoltbatterie zu beginnen. Technischer Hintergrund ist, dass die Ursache für dieses abgewandelte Verfahren zum Starten eines Verbrennungsmotors eine im Wesentlichen entladene Hochvoltbatterie ist. Dadurch ist ein normales Startverfahren nicht möglich. Durch Aufladen der Hochvoltbatterie soll wieder das normale Starten des Verbrennungsmotors ermöglicht werden. Vorteil dieser Ausgestaltung ist, dass, unabhängig von dem Vorhandensein eines externen Ladegerätes für die Hochvoltbatterie, diese wieder aufgeladen werden kann.

In einer anderen Ausgestaltung der Erfindung ist vorgesehen, dass das Verfahren in einer Werkstatt durchgeführt wird. Technischer Hintergrund ist, dass Fahrzeuge mit entladener Hochvoltbatterie, z. B. aufgrund eines Defektes der Hochvoltbatterie, in der Werkstatt repariert werden sollen. Die Reparatur beinhaltet somit auch ein Aufladen der Hochvoltbatterie. Vorteilhaft ist es hier, wenn dazu kein externes Ladegerät benötigt wird, sondern das Fahrzeug selbständig nach Starten des Verbrennungsmotors die entladene Hochvoltbatterie wieder aufladen kann.

In einer weiteren Ausgestaltung der Erfindung ist eine Drehzahlsensorik zur Erfassung der Drehzahl der weiteren Maschine vorgesehen. Der Verfahrensschritt b) wird solange durchgeführt, bis die Drehzahlsensorik eine Drehzahl liefert, die einen vorgebbaren Wert überschreitet. Technischer Hintergrund hierfür ist, dass für die erfolgreiche Durchführung des Verfahrensschrittes c) zur Beschleunigung des Verbrennungsmotors eine bestimmte Rotationsenergie benötigt wird. Vorteil dieser Ausgestaltung ist, dass dadurch sichergestellt wird, dass der Verfahrensschritt c) erst dann durchgeführt wird, wenn genügend Rotationsenergie vorhanden ist, um den Verbrennungsmotor ausreichend anzudrehen.

In einer weiteren Ausgestaltung ist vorgesehen, dass eine Temperatursensorik zur Erfassung der Temperatur des Verbrennungsmotors vorgesehen ist. In Abhängigkeit des Wertes, den die Temperatursensorik liefert, wird das Verfahren modifiziert durchgeführt. Insbesondere wird das Verfahren modifiziert durchgeführt, wenn die Temperatursensorik einen Wert liefert, der einen vorgebbaren Wert überschreitet. Technischer Hintergrund dieser Ausgestaltung ist, dass die Durchführung des Impuls als auch des Direktstartes temperaturabhängig durchgeführt wird.

In einer weiteren Ausgestaltung ist vorgesehen, dass das Verfahren derart modifiziert durchgeführt wird, dass das Verfahren zum Starten eines Verbrennungsmotors eines Hybridantriebstranges nicht durchgeführt wird. Technischer Hintergrund dieser Ausgestaltung ist, dass bei Vorliegen einer zu hohen Temperatur des Verbrennungsmotors das Direktstartverfahren nicht erfolgsversprechend ist. Vorteil dieser Ausgestaltung ist, dass in diesem Fall keine Energie verschwendet wird, um die elektrische Maschine zu beschleunigen.

In einer weiteren Ausgestaltung der Erfindung ist vorgesehen, dass das Verfahren derart modifiziert durchgeführt wird, dass der Verfahrensschritt d) des Verfahrens derart modifiziert wird, dass der Verbrennungsmotor mittels Direktstart erst dann gestartet wird, sobald die Kurbelwellenwinkelsensorik mindestens zum zweiten Mal einen günstigen Kurbelwellenwinkel liefert. Technischer Hintergrund dieser Ausgestaltung ist, dass bei Vorliegen einer zu hohen Temperatur des Verbrennungsmotors der Direktstart nicht erfolgversprechend ist. Deshalb wird hier durch Verzögern des Direktstartes so lange, bis die Kurbelwellenwinkelsensorik mindestens zum zweiten Mal einen günstigen Kurbelwellenwinkel liefert, der Verbrennungsmotor durch ein- und abströmende Luft gekühlt. Vorteil dieser Ausgestaltung ist, dass die Energie der beschleunigten weiteren Maschine zum Starten des Verbrennungsmotors genutzt werden kann, auch bei Vorliegen einer hohen Temperatur des Verbrennungsmotors.

Ausführungsbeispiele der Erfindung sind in den Zeichnungen dargestellt und in der nachfolgenden Beschreibung näher erläutert.

Es zeigen
Figur 1 einen Hybridantriebstrang,
Figur 2 weitere Komponenten eines Hybridantriebstranges
Figur 3 ein Verfahren zum Starten eines Verbrennungsmotors eines Hybridantriebstranges.

### Ausführungsformen der Erfindung

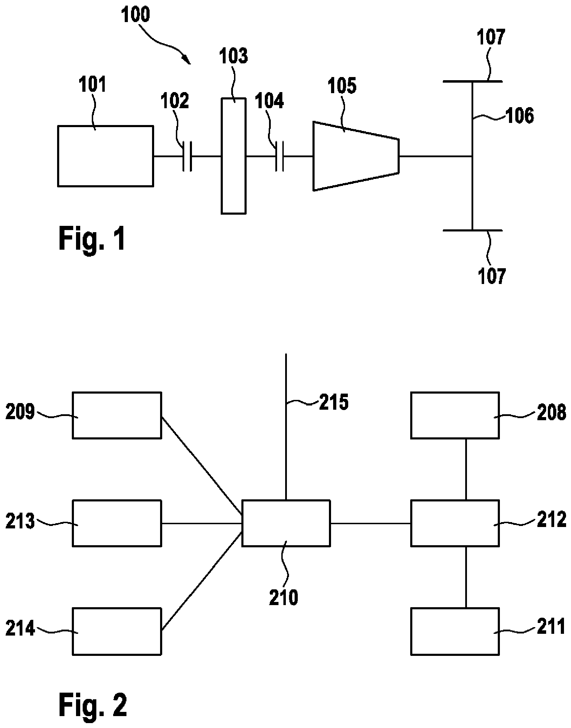

Figur 1 zeigt einen Hybridantriebstrang 100, welcher einen Verbrennungsmotor 101 und eine weitere Maschine 103, insbesondere eine elektrische Maschine aufweist. Der Abtrieb des Hybridantriebstranges 100 setzt sich zusammen aus dem Getriebe 105 sowie der Antriebsachse 106 und den dazugehörigen Antriebsrädern 107. Zwischen dem Verbrennungsmotor 101 und der weiteren Maschine 103 befindet sich die sogenannte Trennkupplung 102. In geöffnetem Zustand der Trennkupplung 102 können sich die beiden Antriebsmaschinen (101,103) unabhängig voneinander drehen. Wird die Trennkupplung 102 geschlossen, so wird der Verbrennungsmotor 101 mit der weiteren Maschine 103 im Wesentlichen drehfest miteinander verbunden. Zwischen dem Abtrieb und der weiteren Maschine 103 befindet sich eine weitere Kupplung 104. Im geöffneten Zustand der weiteren Kupplung 104 kann sich der Abtrieb unabhängig von der weiteren Maschine 103 drehen. Im geschlossenen Zustand der weiteren Kupplung 104 ist die weitere Maschine 103 mit dem Abtrieb im Wesentlichen drehfest miteinander verbunden. Je nach Auslegung des Fahrzeuges kann die weitere Kupplung 104 eine gewöhnliche Kupplung sein, z. B. eine Reibkupplung. Im Falle eines Automatikgetriebes kann das Getriebe 105 mit der weiteren Kupplung 104 in einem gemeinsamen Bauteil zusammen realisiert sein. Insbesondere könnte dann die weitere Kupplung 104 als Drehmomentwandler oder Anfahrelement ausgeführt sein. Dieser mechanische Aufbau ermöglicht es, das Fahrzeug entweder alleine mit der weiteren Maschine 103 anzutreiben, oder zusammen mit dem Verbrennungsmotor 101. Es besteht aber auch die Möglichkeit, dass der Verbrennungsmotor 101 alleine das Fahrzeug und dann aber auch die weitere Maschine 103 antreibt. Der Abtrieb ist mittels der weiteren Kupplung 104 komplett von den beiden Antriebsaggregaten zu trennen. Andererseits besteht die Möglichkeit, durch Öffnen der Kupplungen 102 und 104 die weitere Maschine 103 alleine zu betreiben, aber auch die Möglichkeit, die weitere Maschine 103 durch Schließen der weiteren Kupplung 104 über den Abtrieb anzutreiben, z. B. bei einem rollenden Fahrzeug oder auf einem Rollenprüfstand. Letzteres ist insbesondere in einer Werkstatt vorteilhaft. Durch Öffnen der weiteren Kupplung 104 lässt sich der Abtrieb energetisch abkoppeln von dem Hybridantriebstrang 100, so dass durch Schließen der Trennkupplung 102 die Möglichkeit besteht, die Energie der weiteren Maschine 103 auf den Verbrennungsmotor 101 zu übertragen.

Figur 2 zeigt weitere Komponenten eines Hybridantriebstranges. In der Figur sind eine Kurbelwellenwinkelsensorik 209 zur Erfassung des aktuellen Kurbelwellenwinkels, eine Drehzahlsensorik 213 zur Erfassung der Drehzahl der weiteren Maschine 103 und eine Temperatursensorik 214 zur Erfassung der Temperatur des Verbrennungsmotors 101 dargestellt. Weiter ist die Hochvoltbatterie 208 dargestellt. Die Hochvoltbatterie 208 weist eine Spannung auf, die dazu geeignet ist, die weitere Maschine 103, insbesondere eine elektrische Maschine, anzutreiben. Sie wird auch als Traktionsbatterie bezeichnet. Die Niedervoltbatterie 211 weist eine geringe Spannung auf und dient der Versorgung kleinerer Nebenaggregate und der Steuergeräte des Fahrzeuges. Sie wird häufig auch als Bordnetzbatterie oder Starterbatterie bezeichnet. Die beiden Spannungsebenen der Hochvoltbatterie 208 und der Niedervoltbatterie 211 sind über einen Inverter 212 gekoppelt. Dieser kann sowohl die Funktion eines Inverters als auch die eines Wechselrichters übernehmen. 210 stellt das Steuergerät dar, welches mit den Komponenten dieser Figur, als auch mittels der Verbindung 215 mit den Steuereinrichtungen der Komponenten des Hybridantriebstranges 100, kommuniziert. Auch besteht die Möglichkeit, dass die einzelnen genannten Komponenten und/oder Steuereinrichtungen in dem Steuergerät 210 integriert oder extern angebracht sind.

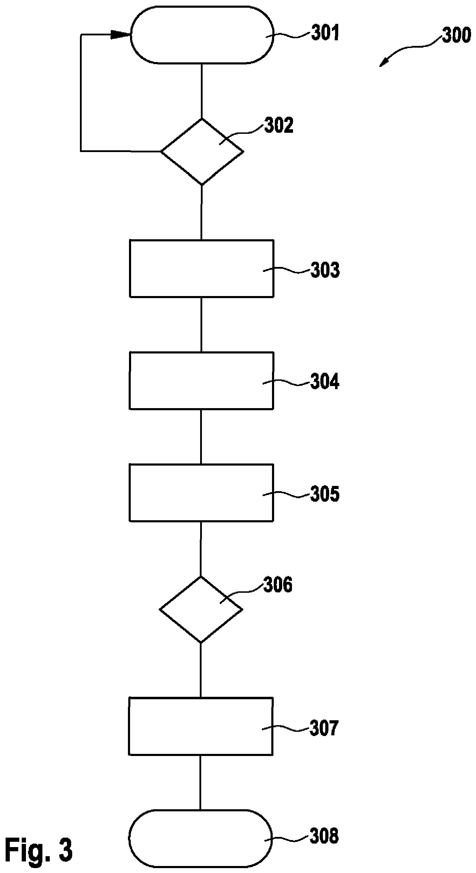

In der Figur 3 ist ein Verfahren zum Starten eines Verbrennungsmotors 101 eines Hybridantriebstranges 100 mit einem Verbrennungsmotor 101 dargestellt. In Schritt 301 startet das Verfahren. In Schritt 302 wird überprüft, ob die Hochvoltbatterie 208 im Wesentlichen entladen ist. In diesem Fall, wenn die Energie der Hochvoltbatterie 208 nicht mehr ausreicht, um die weitere Maschine 103 ausreichend zu beschleunigen, dass ein sicherer Start des Verbrennungsmotors 101 durchgeführt werden kann, wird das Verfahren weiter mit Schritt 303 ausgeführt. Ansonsten kehrt das Verfahren wieder zum Beginn des Verfahrens zu Schritt 301 zurück. Im Schritt 303 wird sichergestellt, dass die Trennkupplung 102 geöffnet ist. Entweder ist sie bereits geöffnet, oder wenn sie geschlossen sein sollte, wird sie geöffnet. Im Schritt 304 wird die weitere Maschine 103 beschleunigt. Im Falle einer elektrischen Maschine kann dies durch Zuführung von elektrischer Energie, beispielsweise durch Anlegen einer elektrischen Spannung, an die Maschine geschehen. Alternativ ist denkbar, dass die Energie des Abtriebs auf die weitere Maschine 103 durch Schließen der weiteren Kupplung 104 übertragen wird. Im anschließenden Schritt 305 wird die Energie der weiteren Maschine 103 durch Schließen der Trennkupplung 102 auf den Verbrennungsmotor 101 übertragen. Dadurch wird der Verbrennungsmotor 101 beschleunigt und angedreht. Schritt 306 wird solange durchgeführt, bis die Kurbelwellenwinkelsensorik 209 einen günstigen Kurbelwellenwinkel liefert, so dass der Verbrennungsmotor 101 mittels Direktstart gestartet werden kann. Dieser Direktstart wird dann im Schritt 307 ausgeführt. Mit Schritt 308 endet das Verfahren.

## Patentansprüche

1. Verfahren zum Starten eines Verbrennungsmotors (101) eines Hybridantriebsstranges (100) mit einem Verbrennungsmotor (101) und mindestens einer elektrischen Maschine (103), wobei eine Trennkupplung (102), die zwischen dem Verbrennungsmotor (101) und der elektrischen Maschine (103) angeordnet ist, und eine Kurbelwellenwinkelsensorik (209) zur Erfassung des aktuellen Kurbelwellenwinkels des Verbrennungsmotors (101) vorgesehen sind, und wobei zum Antreiben der elektrischen Maschine (103) eine Hochvoltbatterie (208) vorgesehen ist, die im Normalfall ausreichend Energie liefert, um durch Antreiben der elektrischen Maschine (103) den Verbrennungsmotor (101) konventionell zu starten, indem dieser auf mindestens Leerlaufgeschwindigkeit beschleunigt wird und anschließend Kraftstoff eingespritzt und gezündet wird, **dadurch gekennzeichnet, dass** bei im Wesentlichen entladener Hochvoltbatterie (208), die nicht mehr ausreichend Energie für einen konventionellen Start des Verbrennungsmotors (101) liefert, folgende Verfahrensschritte zum Starten des Verbrennungsmotors (101) durchgeführt werden, um den Verbrennungsmotor (101) mittels einer Kombination aus Impulsstart und Direktstart zu starten:
a) die Trennkupplung (102) wird oder ist bereits geöffnet,
b) die elektrische Maschine (103) wird beschleunigt,
c) nach Abschluss des Beschleunigungsvorgangs der elektrischen Maschine (103) wird die Trennkupplung (102) geschlossen, damit der Verbrennungsmotor (101) mittels Impulsstart beschleunigt und angedreht wird, bis die Kurbelwellenwinkelsensorik (209) für einen Zylinder des Verbrennungsmotors (101) eine Lage hinter dem oberen Totpunkt liefert,
d) Starten des Verbrennungsmotors (101) mittels Direktstart, indem in den Zylinder Kraftstoff eingespritzt und gezündet wird.

2. Verfahren nach Anspruch 1, **dadurch gekennzeichnet, dass** eine Niedervoltbatterie (211) vorgesehen ist und die elektrische Maschine (103) mittels der Energie aus der Niedervoltbatterie (211) beschleunigt wird.

3. Verfahren nach Anspruch 2, **dadurch gekennzeichnet, dass** ein Inverter (212) vorgesehen ist und die Niedervoltspannung der Niedervoltbatterie (211) mittels des Inverters (212) so transformiert wird, dass die elektrische Maschine (103) mittels der transformierten Spannung betrieben wird.

4. Verfahren nach Anspruch 2, **dadurch gekennzeichnet, dass** eine weitere Kupplung (104) zwischen dem Abtrieb des Hybridantriebsstranges (100) und der weiteren Maschine (103) vorgesehen ist und die weitere Kupplung (104) während des Durchführens der Verfahrensschritte a) bis d) zum Starten des Verbrennungsmotors (101) geöffnet ist.

5. Verfahren nach Anspruch 1, **dadurch gekennzeichnet, dass** der Hybridantriebsstrang (100) einen Abtrieb aufweist, welcher insbesondere Antriebsräder (107) aufweist, und die elektrische Maschine (103) mittels der Energie aus dem Abtrieb beschleunigt wird, insbesondere durch Nutzung der Energie aus den angetriebenen rotierenden Antriebsrädern (107).

6. Verfahren nach Anspruch 5, **dadurch gekennzeichnet, dass** eine weitere Kupplung (104) zwischen dem Abtrieb des Hybridantriebsstranges (100) und der elektrischen Maschine (103) vorgesehen ist und die weitere Kupplung (104) während des Verfahrensschrittes b) geschlossen ist.

7. Verfahren nach einem der vorhergehenden Ansprüche, **dadurch gekennzeichnet, dass** das Verfahren zum Starten eines Verbrennungsmotors (101) eines Hybridantriebsstranges (100) dazu verwendet wird, einen Aufladevorgang einer im Wesentlichen entladenen Hochvoltbatterie (208) zu beginnen.

8. Verfahren nach einem der vorhergehenden Ansprüche, **dadurch gekennzeichnet, dass** das Verfahren in einer Werkstatt durchgeführt wird.

9. Verfahren nach einem der vorhergehenden Ansprüche, **dadurch gekennzeichnet, dass** eine Drehzahlsensorik (213) zur Erfassung der Drehzahl der elektrischen Maschine (103) vorgesehen ist und der Verfahrensschritt b) solange durchgeführt wird, bis die Drehzahlsensorik (213) eine Drehzahl liefert, die einen vorgebbaren Wert überschreitet.

10. Verfahren nach einem der vorhergehenden Ansprüche, **dadurch gekennzeichnet, dass** eine Temperatursensorik (214) zur Erfassung der Temperatur des Verbrennungsmotors (101) vorgesehen ist und das Verfahren modifiziert durchgeführt wird, wenn vor dem Durchführen der Verfahrensschritte zum Starten des Verbrennungsmotors (101) die Temperatursensorik (214) einen Wert liefert, der einen vorgebbaren Wert überschreitet.

11. Verfahren nach Anspruch 10, **dadurch gekennzeichnet, dass** das Verfahren derart modifiziert durchgeführt wird, dass das Verfahren zum Starten eines Verbrennungsmotors (101) eines Hybridantriebsstranges (100) nicht durchgeführt wird.

12. Verfahren nach Anspruch 10, **dadurch gekennzeichnet, dass** das Verfahren derart modifiziert durchgeführt wird, dass der Verfahrensschritt d) des Verfahrens derart modifiziert wird, dass der Verbrennungsmotor (101) mittels Direktstart erst dann gestartet wird, sobald die Kurbelwellenwinkelsensorik (209) mindestens zum zweiten Mal einen günstigen Kurbelwellenwinkel liefert.

13. Vorrichtung zum Starten eines Verbrennungsmotors (101) eines Hybridantriebstranges (100) mit einem Verbrennungsmotor (101) und mindestens einer elektrischen Maschine (103), wobei eine Trennkupplung (102), die zwischen dem Verbrennungsmotor (101) und der elektrischen Maschine (103) angeordnet ist, und eine Kurbelwellenwinkelsensorik (209) zur Erfassung des aktuellen Kurbelwellenwinkels des Verbrennungsmotors (101) vorgesehen sind, und wobei zum Antreiben der elektrischen Maschine (103) eine Hochvoltbatterie (208) vorgesehen ist, die im Normalfall ausreichend Energie liefert, um durch Antreiben der elektrischen Maschine (103) den Verbrennungsmotor (101) konventionell zu starten, indem dieser auf mindestens Leerlaufgeschwindigkeit beschleunigt wird und anschließend Kraftstoff eingespritzt und gezündet wird, **gekennzeichnet durch** Mittel, die dazu geeignet sind, bei im Wesentlichen entladener Hochvoltbatterie (208), die nicht mehr ausreichend Energie für einen konventionellen Start des Verbrennungsmotors (1) liefert, folgende Verfahrensschritte zum Starten des Verbrennungsmotors (101) durchzuführen, um den Verbrennungsmotor (101) mittels einer Kombination aus Impulsstart und Direktstart zu starten:
a) die Trennkupplung (102) wird oder ist bereits geöffnet,
b) die elektrische Maschine (103) wird beschleunigt,
c) nach Abschluss des Beschleunigungsvorgangs der elektrischen Maschine (103) wird die Trennkupplung (102) geschlossen, damit der Verbrennungsmotor (101) mittels Impulsstart beschleunigt und angedreht wird, bis die Kurbelwellenwinkelsensorik (209) für einen Zylinder des Verbrennungsmotors (101) eine Lage hinter dem oberen Totpunkt liefert,
d) Starten des Verbrennungsmotors (101) mittels Direktstart, indem in den Zylinder Kraftstoff eingespritzt und gezündet wird.

## Claims

1. Method for starting an internal combustion engine (101) of a hybrid drive train (100) having an internal combustion engine (101) and at least one electric machine (103), wherein a clutch (102) is arranged between the internal combustion engine (101) and the electric machine (103), and a crankshaft angle sensor system (209) for sensing the current crankshaft angle of the internal combustion engine (101) are provided, and wherein in order to drive the electric machine (103) a high-voltage battery (208) is provided which in a normal case supplies sufficient energy to start the internal combustion engine (101) conventionally by driving the electric machine (103) in that said internal combustion engine (101) is accelerated to at least idling speed and subsequently fuel is injected and ignited, **characterized in that** when the high-voltage battery (208) is essentially discharged and no longer supplies sufficient energy for a conventional start of the internal combustion engine (101), the following method steps for starting the internal combustion engine (101) are carried out in order to start the internal combustion engine (101) by means of a combination of a pulsed start and a direct start;
a) the clutch (102) is opened or is already opened,
b) the electric machine (103) is accelerated,
c) after the conclusion of the acceleration process of the electric machine (103), the clutch (102) is closed so that the internal combustion engine (101) is started and accelerated by means of a pulsed start until the crankshaft angle sensor system (209) supplies a position after the top dead centre for a cylinder of the internal combustion engine (101),
d) starting the internal combustion engine (101) by means of a direct start by injecting fuel into the cylinder and igniting it.

2. Method according to Claim 1, **characterized in that** a low-voltage battery (211) is provided, and the electric machine (103) is accelerated by means of the energy from the low-voltage battery (211).

3. Method according to Claim 2, **characterized in that** a converter (212) is provided, and the low voltage of the low-voltage battery (211) is transformed by means of the inverter (212) in such a way that the electric machine (103) is operated by means of the transformed voltage.

4. Method according to Claim 2, **characterized in that** a further clutch (104) is provided between the output of the hybrid drive train (100) and the further machine (103), and the further clutch (104) is opened during the execution of the method steps a) to d) for starting the internal combustion engine (101).

5. Method according to Claim 1, **characterized in that** the hybrid drive train (100) has an output which has, in particular, drive wheels (107), and the electric machine (103) is accelerated by means of the energy from the output, and in particular by using the energy from the driven rotating drive wheels (107).

6. Method according to Claim 5, **characterized in that** a further clutch (104) is provided between the output of the hybrid drive train (100) and the electric machine (103), and the further clutch (104) is closed during the method step b).

7. Method according to one of the preceding claims, **characterized in that** the method for starting an internal combustion engine (101) of a hybrid drive train (100) is used to start a charging process of an essentially discharged high-voltage battery (208).

8. Method according to one of the preceding claims, **characterized in that** the method is carried out in a workshop.

9. Method according to one of the preceding claims, **characterized in that** a rotational speed sensor system (213) is provided for sensing the rotational speed of the electric machine (103), and the method step b) is carried out until the rotational speed sensor system (213) supplies a rotational speed which exceeds a predefineable value.

10. Method according to one of the preceding claims, **characterized in that** a temperature sensor system (214) is provided for sensing the temperature of the internal combustion engine (101) and the method is carried out in a modified form if, before the execution of the method steps for starting the internal combustion engine (101), the temperature sensor system (214) supplies a value which exceeds a predefineable value.

11. Method according to Claim 10, **characterized in that** the method is carried out in a modified form in such a way that the method for starting an internal combustion engine (101) of a hybrid drive train (100) is not carried out.

12. Method according to Claim 10, **characterized in that** the method is carried out in a modified form in such a way that the method step d) of the method is modified in such a way that the internal combustion engine (101) is started by means of a direct start only once the crankshaft angle sensor system (209) supplies a favourable crankshaft angle at least for the second time.

13. Device for starting an internal combustion engine (101) of a hybrid drive train (100) having an internal combustion engine (101) and at least one electric machine (103), wherein a clutch (102), which is arranged between the internal combustion engine (101) and the electric machine (103), and a crankshaft angle sensor system (209) for sensing the current crankshaft angle of the internal combustion engine (101), are provided, and wherein in order to drive the electric machine (103) a high-voltage battery (208) is provided which in a normal situation supplies sufficient energy to start the internal combustion engine (101) conventionally by driving the electric machine (103) in that said internal combustion engine (101) is accelerated to at least idling speed and subsequently fuel is injected and ignited, **characterized by** means which are suitable, given an essentially discharged high-voltage battery (208) which no longer supplies sufficient energy for a conventional start of the internal combustion engine (101), to carry out the following method steps for starting the internal combustion engine (101), in order to start the internal combustion engine (101) by means of a combination of a pulsed start and a direct start:
a) the clutch (102) is opened or is already opened,
b) the electric machine (103) is accelerated,
c) after the conclusion of the acceleration process of the electric machine (103), the clutch (102) is closed so that the internal combustion engine (101) is started and accelerated by means of a pulsed start until the crankshaft angle sensor system (209) supplies a position after the top dead centre for a cylinder of the internal combustion engine (101),
d) starting the internal combustion engine (101) by means of a direct start by injecting fuel into the cylinder and igniting it.

## Revendications

1. Procédé de démarrage d'un moteur à combustion interne (101) d'une chaîne cinématique hybride (100) comprenant un moteur à combustion interne (101) et au moins une machine électrique (103), un accouplement de séparation (102), qui est disposé entre le moteur à combustion interne (101) et la machine électrique (103), et un système de détection de vilebrequin (209) destiné à détecter l'angle de vilebrequin actuel du moteur à combustion interne (101) étant présents, et une batterie à haute tension (208) étant présente pour l'entraînement de la machine électrique (103), laquelle délivre en situation normale suffisamment d'énergie pour le démarrage conventionnel du moteur à combustion interne (101) par l'entraînement de la machine électrique (103) en ce que celui-ci est accéléré au moins à la vitesse de ralenti minimale et du carburant est ensuite injecté et allumé, **caractérisé en ce que** lorsque la batterie à haute tension (208) est pour l'essentiel déchargée et ne délivre plus suffisamment d'énergie pour un démarrage conventionnel du moteur à combustion interne (101), les étapes suivantes sont exécutées pour le démarrage du moteur à combustion interne (101) afin de démarrer le moteur à combustion interne (101) au moyen d'une combinaison de démarrage impulsionnel et de démarrage direct :
a) l'accouplement de séparation (102) est ouvert ou l'est déjà,
b) la machine électrique (103) est accélérée,
c) après la fin de l'opération d'accélération de la machine électrique (103), l'accouplement de séparation (102) est fermé afin que le moteur à combustion interne (101) soit accéléré au moyen d'un démarrage impulsionnel et mis en rotation jusqu'à ce que le système de détection de vilebrequin (209) fournisse une position derrière le point mort haut pour un cylindre du moteur à combustion interne (101),
d) démarrage du moteur à combustion interne (101) au moyen du démarrage direct en injectant et en allumant du carburant dans le cylindre.

2. Procédé selon la revendication 1, **caractérisé en ce qu'**il existe une batterie à basse tension (211) et la machine électrique (103) est accélérée au moyen de l'énergie en provenance de la batterie à basse tension (211).

3. Procédé selon la revendication 2, **caractérisé en ce qu'**il existe un onduleur (212) et la basse tension de la batterie à basse tension (211) est transformée au moyen de l'onduleur (212) de telle sorte que la machine électrique (103) est mise en fonctionnement au moyen de la tension transformée.

4. Procédé selon la revendication 2, **caractérisé en ce qu'**il existe un accouplement supplémentaire (104) entre la prise de force de la chaîne cinématique hybride (100) et la machine supplémentaire (103), et l'accouplement supplémentaire (104) est ouvert pendant l'exécution des étapes a) à d) du procédé en vue du démarrage moteur à combustion interne (101).

5. Procédé selon la revendication 1, **caractérisé en ce que** la chaîne cinématique hybride (100) possède une prise de force qui comporte notamment des roues d'entraînement (107) et la machine électrique (103) est accélérée au moyen de l'énergie provenant de la prise de force, notamment en utilisant l'énergie en provenance des roues d'entraînement (107) en rotation entraînées.

6. Procédé selon la revendication 5, **caractérisé en ce qu'**il existe un accouplement supplémentaire (104) entre la prise de force de la chaîne cinématique hybride (100) et la machine électrique (103), et l'accouplement supplémentaire (104) est fermé pendant l'étape b) du procédé.

7. Procédé selon l'une des revendications précédentes, **caractérisé en ce que** le procédé de démarrage d'un moteur à combustion interne (101) d'une chaîne cinématique hybride (100) est utilisé pour commencer le processus de charge d'une batterie à haute tension (208) pour l'essentiel déchargée.

8. Procédé selon l'une des revendications précédentes, **caractérisé en ce que** le procédé est mis en oeuvre dans un atelier.

9. Procédé selon l'une des revendications précédentes, **caractérisé en ce qu'**il existe un système de détection de vitesse de rotation (213) destiné à détecter la vitesse de rotation de la machine électrique (103) et l'étape b) du procédé est exécutée jusqu'à ce que le système de détection de vitesse de rotation (213) délivre une vitesse de rotation qui dépasse une valeur pouvant être prédéfinie.

10. Procédé selon l'une des revendications précédentes, **caractérisé en ce qu'**il existe un système de détection de température (214) destiné à détecter la température du moteur à combustion interne (101) et la mise en oeuvre du procédé est modifiée si, avant l'exécution des étapes du procédé en vue de démarrer le moteur à combustion interne (101), le système de détection de température (214) délivre une valeur qui dépasse une valeur pouvant être prédéfinie.

11. Procédé selon la revendication 10, **caractérisé en ce que** la mise en oeuvre du procédé est modifiée de telle sorte que le procédé de démarrage d'un moteur à combustion interne (101) d'une chaîne cinématique hybride (100) n'est pas mis en oeuvre.

12. Procédé selon la revendication 10, **caractérisé en ce que** la mise en oeuvre du procédé est modifiée de telle sorte que l'étape d) du procédé est modifiée de telle sorte que le moteur à combustion interne (101) n'est démarré au moyen du démarrage direct que dès que le système de détection de vilebrequin (209) délivre au moins pour la deuxième fois un angle de vilebrequin favorable.

13. Dispositif de démarrage d'un moteur à combustion interne (101) d'une chaîne cinématique hybride (100) comprenant un moteur à combustion interne (101) et au moins une machine électrique (103), un accouplement de séparation (102), qui est disposé entre le moteur à combustion interne (101) et la machine électrique (103), et un système de détection de vilebrequin (209) destiné à détecter l'angle de vilebrequin actuel du moteur à combustion interne (101) étant présents, et une batterie à haute tension (208) étant présente pour l'entraînement de la machine électrique (103), laquelle délivre en situation normale suffisamment d'énergie pour le démarrage conventionnel du moteur à combustion interne (101) par l'entraînement de la machine électrique (103) en ce que celui-ci est accéléré au moins à la vitesse de ralenti minimale et du carburant est ensuite injecté et allumé, **caractérisé par** des moyens qui sont conçus pour, lorsque la batterie à haute tension (208) est pour l'essentiel déchargée et ne délivre plus suffisamment d'énergie pour un démarrage conventionnel du moteur à combustion interne (1), exécuter les étapes suivantes pour le démarrage du moteur à combustion interne (101) afin de démarrer le moteur à combustion interne (101) au moyen d'une combinaison de démarrage impulsionnel et de démarrage direct :
a) l'accouplement de séparation (102) est ouvert ou l'est déjà,
b) la machine électrique (103) est accélérée,
c) après la fin de l'opération d'accélération de la machine électrique (103), l'accouplement de séparation (102) est fermé afin que le moteur à combustion interne (101) soit accéléré au moyen d'un démarrage impulsionnel et mis en rotation jusqu'à ce que le système de détection de vilebrequin (209) fournisse une position derrière le point mort haut pour un cylindre du moteur à combustion interne (101),
d) démarrage du moteur à combustion interne (101) au moyen du démarrage direct en injectant et en allumant du carburant dans le cylindre.
